# DEMANDE DE BREVET EUROPEEN

(11) **EP 2 590 292 A1**
(43) Date de publication de la demande: **08.05.2013**
(21) Numéro de dépôt: 11188053.0
(22) Date de dépôt: 07.11.2011
(51) Int. Cl.: H02J 3/38, H02J 15/00

(54) **Procede de gestion d'une installation de production et de stockage d'energie renouvelable**

(71) Demandeur: Belenos Clean Power Holding AG, 2502 Bienne (CH)
(72) Inventeur: El Roustom, Bahaa, 1006 Lausanne (CH); Onillon, Emmanuel, 2208 Les Hauts Geneveys (CH)
(74) Mandataire: Ravenel, Thierry Gérard Louis

(57) **Abrégé**

L'invention concerne une installation de production et de stockage d'énergie (100) comportant
- des moyens primaires (110) pour générer de l'énergie thermique à partir de l'énergie solaire,
- des moyens de stockage (109) agencés pour stocker l'énergie thermique fournie par les moyens primaires,

l'installation comprenant en outre des moyens secondaires (117) pour générer de l'énergie thermique et une unité de contrôle (113) pour gérer ladite installation, ladite unité de contrôle étant apte à recevoir des données représentatives de prévisions météorologiques de sorte à pouvoir, en fonction de ses données représentatives de prévisions météorologiques, prévoir la production d'énergie thermique des moyens primaires et en ce que ladite unité de contrôle est capable de transférer l'énergie thermique des moyens secondaires vers les moyens de stockage dans la cas où les moyens primaires ne sont pas capables de subvenir aux besoins prédéfinis en énergie thermique de ladite installation.

## Description

### Arrière-plan de l'invention

La présente invention concerne un procédé de gestion d'une installation de production et de stockage d'énergie renouvelable. La présente invention concerne plus particulièrement une installation dans laquelle une partie au moins de l'énergie renouvelable produite est convertie en chaleur.

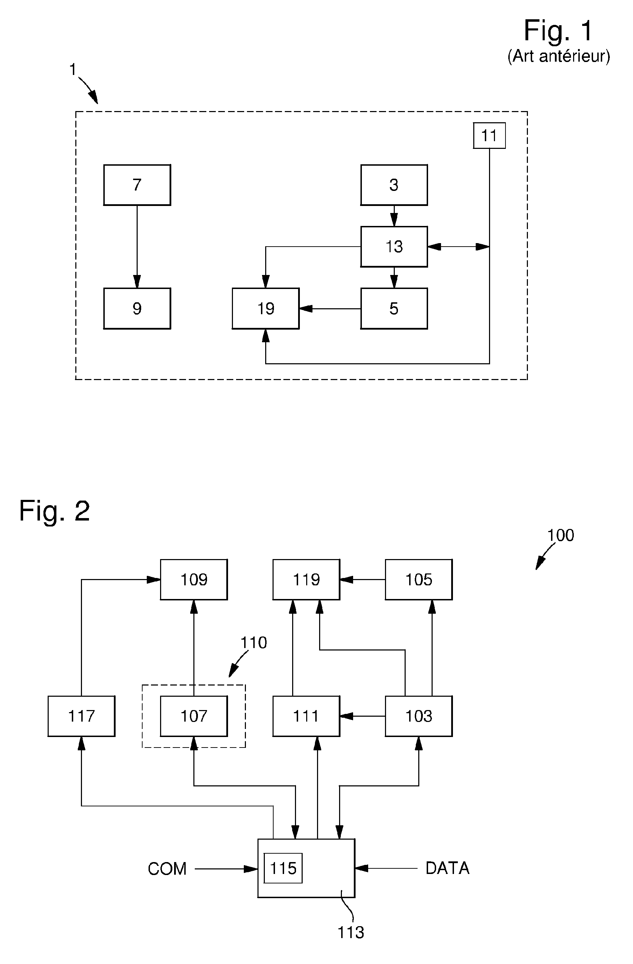

II est connu que chaque bâtiment qu'il soit privé ou public, industriel ou domestique comprend une installation électrique 1 comme visible à la figure 1. L'installation de ces bâtiment est en général pourvu d'une connexion au réseau électrique public 11 et comprend un certain nombre d'appareils consommateurs d'électricité 19 tel que des machines, le chauffage, l'eau chaude.

Or, ces dernières années, les problématiques climatiques ont permis l'exploitation des énergies renouvelables à l'échelle locale de sorte que chaque bâtiment peut produire partiellement sa propre énergie. Un exemple d'un tel bâtiment comprend toujours une connexion au réseau électrique mais comprend en outre des moyens pour produire de l'électricité à partir d'énergies renouvelables 3 comme par exemple avec des mini-éoliennes ou des panneaux photovoltaïques. L'électricité produite par ces panneaux photovoltaïques éoliennes domestiques ou mini-éoliennes est alors utilisée directement par le bâtiment, revendu au fournisseur d'électricité ou peut être stockée sous différentes formes comme par exemple dans des batteries 5 ou sous forme d'hydrogène et d'oxygène pour alimente une pile à combustible intégrée dans le bâtiment ou dans une voiture.

La production d'électricité n'est pas la seule énergie qu'il est possible de fabriquer par soit même et une des autres possibilités est de produire son eau chaude. Pour cela, des panneaux solaires thermiques 7 sont utilisés comme visible à la figure 1. Ces derniers consistent en des panneaux captant la lumière du soleil pour chauffer un liquide caloporteur circulant dans un circuit fermé. Ce circuit fermé traversant un ballon d'eau 9 et par échange thermique, la chaleur du liquide caloporteur est transmise à l'eau du ballon d'eau de sorte que l'eau chauffe. Cette solution remplace alors l'utilisation d'une résistance électrique ou de la chaudière à gaz ou à mazout pour la fourniture de l'eau chaude. Le tout est contrôlé par l'unité de contrôle 13.

Or, un tel système n'est actuellement intéressant que dans les régions ou le taux d'ensoleillement est élevé. Une des contraintes des énergies renouvelables est que leur utilisation doit être transparente c'est à dire imperceptible par l'utilisateur. Celui-ci doit pouvoir garder les mêmes habitudes de consommation. Toutefois, l'utilisation du soleil pour faire de l'eau chaude n'est viable que si l'utilisateur peut avoir chaque jour de l'eau chaude en quantité suffisante. Etre totalement indépendant de l'électricité du réseau ou d'énergie fossiles pour la production d'eau chaude nécessite, en conséquence, un taux d'ensoleillement élevé. Il existe malheureusement que quelques régions qui pouvant permettre une telle indépendance.

Un autre inconvénient des énergies renouvelables est que l'utilisateur ne sait jamais à l'avance quelle quantité d'eau chaude il aura à disposition avec un système de panneaux solaires thermiques. Dès lors, l'utilisateur est soumis aux aléas de la météo et ne peut prévoir correctement la quantité d'eau chaude à disposition.

### Résumé de l'invention

Un but de la présente invention est de résoudre les inconvénients des installations de l'art antérieur en fournissant un procédé de gestion qui gère une installation domestique capable de gérer la production de chaleur pour un système sanitaire ou de chauffage en fonction de la météo.

Pour cela, la présente invention prévoit un procédé de gestion d'une installation de production et de stockage d'énergie comportant
- des moyens primaires pour générer de l'énergie thermique à partir d'énergie renouvelable,
- des moyens de stockage agencés pour stocker l'énergie thermique fournie par les moyens primaires,
- des moyens secondaires pour générer de l'énergie thermique et
- une unité de contrôle pour gérer ladite installation, caractérisé en ce que ledit procédé comprend les étapes suivantes :
   a) définir une consigne représentant la quantité d'énergie thermique nécessaire à l'installation ;
   b) récupérer des données représentatives de prévisions météorologiques, et utiliser ces données pour réaliser des prévisions de production d'énergie thermique par les moyens primaires pour générer de la chaleur à partir d'énergie renouvelable;
   c) transférer l'énergie thermique produite par les moyens primaires pour générer de l'énergie thermique à partir de d'énergie renouvelable vers les moyens de stockage,
   d) si les prévisions de production ne permettent pas de satisfaire la consigne définie représentant la quantité d'énergie thermique nécessaire à l'installation, utiliser les moyens secondaires pour générer de l'énergie thermique afin de transférer l'énergie thermique générée par lesdits moyens secondaires vers les moyens de stockage de sorte que la consigne soit respectée.

On comprendra que grâce au procédé de la présente invention, l'installation électrique est capable de prévoir, en fonction de la météo, l'énergie thermique qui sera produite, et donc l'eau chaude produite afin de pouvoir en informer l'utilisateur et ainsi d'adapter la gestion de l'installation selon les besoins.

Dans un premier mode de réalisation avantageux, que les moyens primaires comprennent des moyens parallèles pour générer de l'électricité à partir d'énergie renouvelable et des moyens pour transformer cette électricité en énergie thermique.

Dans un second mode de réalisation avantageux, que l'installation comprend en outre une installation réseau, une unité consommatrice d'électricité et des moyens de stockage de l'énergie électrique reliés directement aux moyens parallèles pour générer de l'électricité à partir d'énergie renouvelable et en ce que
L'étape a) consiste en outre à définir une consigne représentant la quantité d'énergie électrique nécessaire à l'installation ;
L'étape b) consiste également à récupérer des données représentatives de prévisions météorologiques utilisées pour réaliser des prévisions de production d'énergie électrique par les moyens pour générer de l'électricité à partir d'énergie renouvelable ;
L'étape c) consiste en outre à transférer l'énergie électrique produite les moyens parallèles pour générer de l'électricité à partir d'énergie renouvelable vers l'unité consommatrice d'électricité et/ou les moyens de stockage de l'énergie électrique et/ou l'alimentation réseau, et
L'étape d) consiste également à utiliser l'alimentation réseau afin de transférer de l'énergie électrique vers les moyens de stockage de l'énergie électrique et/ou l'unité consommatrice d'électricité si les prévisions de production ne permettent pas de satisfaire la consigne définie représentant la quantité d'énergie électrique nécessaire à l'installation.

Dans un troisième mode de réalisation avantageux, les moyens primaires pour générer de l'énergie thermique à partir d'énergie renouvelable comprennent des panneaux solaires thermiques et un circuit fermé dans lequel circule un liquide caloporteur.

Dans un autre mode de réalisation avantageux, les moyens de stockage de l'énergie thermique sont un réservoir d'eau utilisé pour une installation sanitaire et/ou le chauffage, ladite eau étant chauffée par échange thermique avec le liquide caloporteur des moyens primaires pour générer de l'énergie thermique à partir de l'énergie solaire.

Dans un autre mode de réalisation avantageux, la consigne représentant l'énergie thermique nécessaire à l'installation est défini par des calculs permettant d'obtenir la consommation moyenne de chaleur.

Dans un autre mode de réalisation avantageux, la quantité d'énergie thermique nécessaire à l'installation est entrée manuellement par l'utilisateur.

Dans un autre mode de réalisation avantageux, la consigne représentant la quantité de chaleur nécessaire à l'installation consiste à avoir en permanence les moyens de stockage de l'énergie thermique pleins.

La présente invention a également pour objet une installation de production et de stockage d'énergie comportant
- des moyens primaires pour générer de l'énergie thermique à partir de l'énergie solaire,
- des moyens de stockage agencés pour stocker l'énergie thermique fournie par les moyens primaires,
l'installation comprenant en outre des moyens secondaires pour générer de l'énergie thermique et une unité de contrôle pour gérer ladite installation, ladite unité de contrôle étant apte à recevoir des données représentatives de prévisions météorologiques de sorte à pouvoir, en fonction de ses données représentatives de prévisions météorologiques, prévoir la production d'énergie thermique des moyens primaires et en ce que ladite unité de contrôle est capable de transférer l'énergie thermique des moyens secondaires vers les moyens de stockage dans la cas où les moyens primaires ne sont pas capables de subvenir aux besoins prédéfinis en énergie thermique de ladite installation.

Dans un premier mode de réalisation avantageux, les moyens primaires comprennent des moyens parallèles pour générer de l'électricité à partir d'énergie renouvelable et des moyens pour transformer cette électricité en énergie thermique.

Dans un second mode de réalisation avantageux, les moyens primaires pour générer de l'énergie thermique à partir de l'énergie solaire comprennent des panneaux solaires thermiques et un circuit fermé dans lequel circule un liquide caloporteur.

Dans un troisième mode de réalisation avantageux, les moyens de stockage de l'énergie thermique sont un réservoir d'eau utilisé pour une installation sanitaire et/ou le chauffage, ladite eau étant chauffée par échange thermique avec le liquide caloporteur des moyens primaires pour générer de l'énergie thermique à partir de l'énergie solaire.

Dans un autre mode de réalisation avantageux, l'installation comprend en outre une alimentation au réseau électrique et une unité consommatrice d'électricité agencée pour utiliser l'énergie des moyens pour générer de l'électricité à partir d'énergie renouvelable et/ou du réseau électrique.

Dans un autre mode de réalisation avantageux, l'installation comprend en outre des moyens de stockage d'électricité qui sont des batteries et/ou un électrolyseur créant de l'hydrogène avec l'énergie électrique des moyens pour générer de l'électricité à partir d'énergie renouvelable ou du réseau électrique.

Dans un autre mode de réalisation avantageux, les moyens secondaires pour générer de l'énergie thermique utilisent de l'électricité fournie par les moyens parallèles pour générer de l'électricité à partir d'énergie renouvelable et/ou le réseau électrique.

Dans un autre mode de réalisation avantageux, les moyens secondaires pour générer de l'énergie thermique utilisent des énergies fossiles.

Dans un autre mode de réalisation avantageux, l'installation comprend en outre un véhicule utilisant l'énergie électrique des moyens de stockage de l'énergie électrique.

### Description sommaire des dessins

La figure 1 est le schéma de principe de l'installation selon l'art antérieur.
La figure 2 représente l'installation électrique selon la présente invention;
La figure 3 représente une première variante l'installation électrique selon la présente invention ;et
La figure 4 représente une seconde l'installation électrique selon la présente invention.

### Description détaillée d'un mode de réalisation

En se référant à la figure 2, on peut voir représentée une installation de production et de stockage d'énergie renouvelable 100 correspondant à un mode de réalisation particulier de la présente invention. Cette installation 100 comprend notamment des moyens primaires 110 pour générer de l'énergie thermique à partir d'énergie renouvelable. Ces moyens primaires 110 pour générer de l'énergie thermique à partir d'énergie renouvelable peuvent être par exemple des panneaux solaires thermiques 107. L'énergie thermique produite est envoyé vers des moyens de stockage de l'énergie thermique 109. Typiquement, ces moyens de stockage de l'énergie thermique 109 se présentent sous la forme d'un réservoir rempli d'un liquide, dans le cas présent, il s'agit d'un ballon d'eau. L'énergie thermique produite par les panneaux solaires thermiques 107 est transféré aux moyens de stockage de l'énergie thermique 109 par échange thermique. Par exemple, les panneaux solaires thermiques 107 comprennent un circuit fermé rempli d'un liquide caloporteur chauffé par les panneaux solaires thermiques. Ce circuit fermé passe au niveau des moyens de stockage de l'énergie thermique 109 c'est-à-dire du réservoir de liquide de sorte à transférer thermiquement l'énergie accumulé dans le liquide caloporteur vers le liquide contenu dans le réservoir, le liquide du réservoir est alors chauffé. Néanmoins, il est envisageable que les panneaux solaires thermiques 107 chauffent directement le liquide du réservoir. Pour cela, ce liquide contenu dans le réservoir circule, via une pompe, dans un conduit passant au niveau des panneaux solaires thermiques de sorte à chauffer directement ledit liquide

L'installation 100 comprend en outre des moyens pour générer de l'électricité à partir d'énergie renouvelable 103 appelés aussi moyens parallèles ou moyens parallèles pour générer de l'électricité à partir d'énergie renouvelable 103. Ces moyens parallèle 103 comprennent en outre un répartiteur d'énergie (non représenté) pour envoyer l'électricité produite vers une unité consommatrice d'énergie 119 ou vers des moyens de stockage de l'énergie électrique 105, vers le réseau électrique 111.

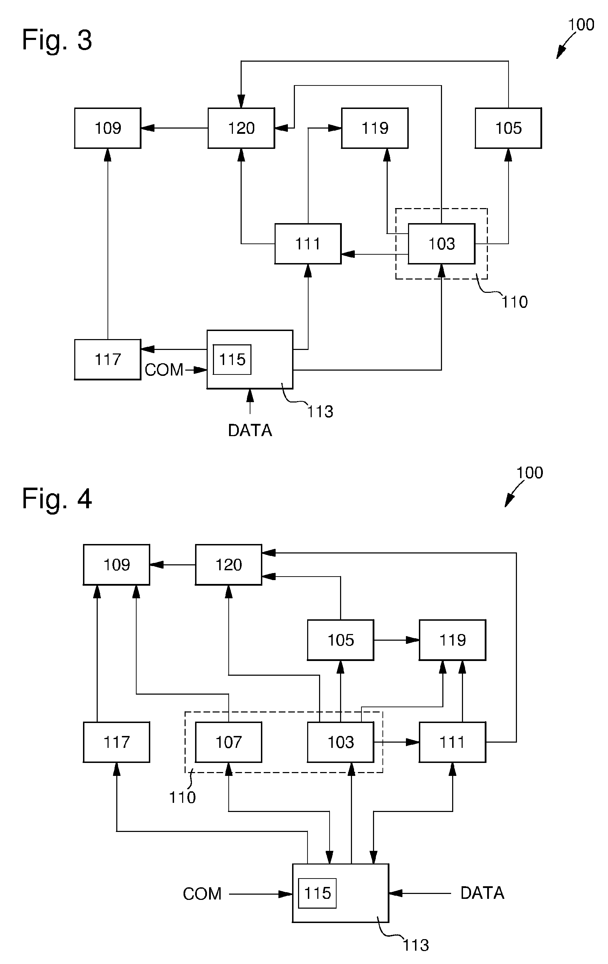

Dans une variante, les moyens primaires 110 pour générer de l'énergie thermique à partir d'énergie renouvelable comprennent en outre les moyens parallèles pour générer de l'électricité à partir d'énergie renouvelable 103 dont l'électricité est envoyée vers un moyen de transformation 120 pour transformer cette énergie électrique en énergie thermique comme une résistance. Cette énergie thermique est alors envoyée aux moyens de stockage de l'énergie thermique 109 comme visible à la figure 4. En effet, les moyens primaires pour générer de l'énergie thermique à partir d'énergie renouvelable 110 comprennent des panneaux solaires thermiques 107 et/ou moyens pour générer de l'électricité à partir d'énergie renouvelable 103. Ces moyens pour générer de l'électricité à partir d'énergie renouvelable 103 peuvent être les seuls pour fournir de l'énergie thermique comme visible à la figure 3.

Dans le cas ou l'électricité des moyens parallèles pour générer de l'électricité à partir d'énergie renouvelable 103 est envoyé vers le réseau ou l'unité consommatrice 119 ou les moyens de stockage de l'énergie électrique 105, il est connu que les moyens pour générer de l'électricité à partir d'énergie renouvelable 103 fournissent de l'électricité en courant continu alors que les installations électriques qui équipent la maison sont, de façon habituelle, prévues pour fonctionner sous courant alternatif. C'est la raison pour laquelle un onduleur (non représenté) est prévu dans le répartiteur d'énergie. Grâce à cet onduleur, le répartiteur d'énergie est en mesure de fournir un courant alternatif dont la phase et la tension sont compatible avec celles du réseau. De façon connue en soi, dans le présent mode de réalisation, les moyens parallèles 103 pour générer de l'électricité à partir d'énergie renouvelable sont formés d'une pluralité de cellules photovoltaïques assemblées sur des panneaux communément appelés panneaux solaires. On comprendra toutefois, que selon une variante, les moyens 103 pourraient être constitués par exemple par une ou plusieurs mini-éoliennes, par une génératrice entraînée par une roue ou une turbine à eau, ou par tout autre dispositif connu de l'homme du métier et permettant de produire de l'électricité à partir d'énergie renouvelable.

Les moyens de stockage 105 peuvent être constitués d'un électrolyseur permettant de convertir l'électricité fournie par les moyens 103 en énergie électrochimique par séparation de l'hydrogène et de l'oxygène de l'eau ou alors de batteries pour stocker l'électricité issu des moyens pour générer de l'électricité à partir d'énergie renouvelable 3. Bien entendu, il est envisageable que les moyens de stockage 105 comprennent à la fois l'électrolyseur et des batteries.

La figure 1 montre que l'installation 100 comprend une unité consommatrice d'électricité 119 qui, dans le présent exemple, est formée par l'ensemble des installations électriques qui équipent une maison individuelle comme le chauffage électrique, l'éclairage et les divers appareils électroménagers. Bien évidemment, au lieu des installations électriques équipant une maison individuelle, il pourrait s'agir tout aussi bien, par exemple, des installations électriques équipant un bâtiment public, un hôpital ou encore une fabrique, etc. L'installation 100 peut être co-alimentée par un réseau 111 exploité par un fournisseur d'électricité en plus des moyens pour générer de l'électricité à partir d'énergie renouvelable 103

L'installation 100 comprend en outre une unité de contrôle 113 qui est utilisé pour la gérer. Cette unité de contrôle 113 est utilisé pour récupérer des données sur l'alimentation au réseau électrique 111, les moyens primaires 110 pour générer de l'énergie thermique, sur les moyens parallèles pour générer de l'électricité à partir d'énergie renouvelable 103 et d'agir sur eux afin, notamment, d'alimenter l'unité consommatrice d'électricité 119. Cette unité de contrôle 113 est aussi utilisée pour gérer les moyens de stockage de l'énergie thermique 109 et les moyens de stockage de l'électricité 105. Cette unité de contrôle 113 comprend un système d'interface 115 permettant à l'utilisateur d'agir ou de prendre connaissances de certaines données.

Conformément à la présente invention, l'unité de contrôle 113 est capable d'utiliser des informations extérieures DATA pour gérer l'installation. Pour se faire, l'unité de contrôle 113 est connectée à différents réseaux de communications pour récupérer des données météorologiques comme par exemple Internet ou les réseaux téléphoniques ou radiofréquences. Ces données peuvent être différentes suivant le type d'énergie renouvelable utilisée. En effet, l'utilisation de sources d'énergies renouvelables pour produire de l'énergie thermique ou électrique est dépendante des conditions météorologique. Sans soleil, les panneaux photovoltaïques ou les panneaux solaires thermiques 107 ne fonctionnent pas et sans vent, les éoliennes ne fonctionnent pas. Dans le cas de l'utilisation de l'énergie solaire, les prévisions d'ensoleillement et de rayonnement solaire sont les données qui sont récupérées par l'unité de contrôle. Dans le cas de l'utilisation de l'énergie éolien, l'unité de contrôle 113 récupérera des données sur les vents comme la direction du vent ou la vitesse du vent. L'unité de contrôle est donc agencée pour recevoir des informations représentatives de prévisions météorologiques et de les utiliser pour optimiser la gestion de l'installation, ces données portant sur une période prédéterminée. L'unité de contrôle 113 utilise ses données de prévisions météorologiques pour prévoir la production d'énergie solaire sur ladite période prédéterminée. Effectivement, l'unité de contrôle 113 connait les caractéristiques techniques des panneaux solaires thermiques et des panneaux solaires photovoltaïques et est capable de réaliser des prévisions sur la production d'énergie électrique ou thermique en fonction de ces prévisions météo. Cette capacité à prévoir la production d'énergie permet à l'unité de contrôle 113 de prévoir sa gestion de sorte à ce que les besoins soient satisfaits.

En effet, l'unité de contrôle 113 doit respecter une consigne COM concernant la quantité d'énergie thermique et/ou électrique à fournir.

Pour la gestion l'énergie thermique, celle-ci se présente sous la forme d'un réservoir d'eau chaude utilisée pour le chauffage ou la douche, il est donc nécessaire que l'utilisateur puisse avoir de l'eau chaude quand il le souhaite. Il est donc nécessaire de définir les besoins de l'utilisateur. Une première solution consiste à faire en sorte que le réservoir soit toujours plein d'eau chaude de sorte que, dés que de l'eau est consommée, de l'eau froide est envoyée dans le réservoir puis chauffée. Une autre solution consiste à définir une quantité d'eau chaude optimale. Pour cela, l'unité de contrôle est capable de mesurer, pendant un laps de temps déterminé, la quantité d'eau chaude ou d'énergie thermique utilisée quotidiennement par l'utilisateur et d'en faire une moyenne. Cette solution à l'avantage de n'utiliser que la quantité d'énergie thermique nécessaire tout en permettant d'avoir une marge pour produire de l'eau chaude supplémentaire. Il est également possible d'avoir deux réservoirs d'eau différents, un pour la douche et un pour le chauffage, l'un des deux réservoirs étant prioritaire sur l'autre.

Dans le cas, visible à la figure 2, où les moyens primaires 110 pour générer de l'énergie thermique à partir d'énergie renouvelable sont uniquement des panneaux solaires thermiques 107 et que l'installation 100 comprend en outre moyens parallèles pour générer de l'électricité à partir d'énergie renouvelable 103 pour alimenter le réseau 111 ou des moyens de stockage de l'énergie électrique 105 ou une unité consommatrice d'électricité 119, la gestion de l'installation 100 se passe comme ci-après.

Si les prévisions de production ne permettent pas de satisfaire à la consigne COM liées aux besoins de l'utilisateur, l'unité de contrôle 113 s'adapte. Pour cela, l'installation comprend des moyens secondaires 117 pour produire de l'énergie thermique. Ces moyens secondaires 117 pour produire de l'énergie thermique sont alors activés par l'unité de contrôle 113 de sorte à fournir l'énergie thermique nécessaire pour répondre aux besoins. Ces moyens secondaires 117 pour produire de l'énergie thermique peuvent être par exemple un système fonctionnant au fioul, au gaz ou au bois afin de chauffer le liquide caloporteur se trouvant dans le circuit fermé ou alors de chauffer un second liquide caloporteur se trouvant dans un second circuit fermé qui chauffe l'eau du réservoir. Il est également possible d'imaginer que le réservoir d'eau est pourvu d'une résistance électrique utilisant l'électricité du réseau pour chauffer ladite eau. On pourra envisager que l'électricité utilisée provient des moyens parallèles pour générer de l'électricité à partir d'énergie renouvelable 103 et/ou des moyens de stockage 105 de l'énergie électrique.

De même, si les conditions météorologiques ne permettent pas aux moyens pour générer de l'électricité à partir d'énergie renouvelable 103 de couvrir les besoins définis par l'unité de contrôle 113, celle-ci est alors capable d'aller prendre l'électricité du réseau pour combler la différence.

En même temps, ces données de prévisions sont utilisées pour permettre de prévoir la production d'électricité par les moyens pour générer de l'électricité à partir d'énergie renouvelable 103. Cette capacité permet à l'unité de contrôle 113 de savoir, outre la quantité d'énergie thermique produite par les moyens primaires 110, la quantité d'électricité qui sera produite par les moyens pour générer de l'électricité à partir d'énergie renouvelable 103 dans le laps de temps pour lequel les prévisions sont faites. L'unité de contrôle 113 pourra alors adapter sa gestion et utiliser toutes les ressources dont elle dispose pour respecter les consignes COM définies. On entend par là que l'unité de contrôle 113 est apte à utiliser l'alimentation du réseau 111 ou les moyens de stockage 105: batterie ou ensemble pile à combustible et élément de stockage de l'oxygène et de l'hydrogène, pour fournir l'électricité nécessaire. L'unité de contrôle 113 est également apte à décider, en fonction des couts, de vendre l'électricité produite par les moyens pour générer de l'électricité à partir d'énergie renouvelable 103 et de n'utiliser que l'électricité du réseau 111.

Dans le cas d'une première variante, visible à la figure 3, où les moyens primaires 110 pour générer de l'énergie thermique à partir d'énergie renouvelable sont uniquement des moyens pour générer de l'électricité à partir d'énergie renouvelable 103 pouvant être aussi utilisés pour alimenter le réseau 111 ou des moyens de stockage de l'énergie électrique 105 ou une unité consommatrice d'électricité 119, la gestion de l'installation 100 se passe comme ci-après.

En effet, dans ce cas là, les moyens pour générer de l'électricité à partir d'énergie renouvelable 103 sont utilisés en priorité pour faire de l'eau chaude et ainsi, l'électricité produite par ces moyens pour générer de l'électricité à partir d'énergie renouvelable 103 est envoyée, via le répartiteur d'énergie vers les moyens pour transformer l'énergie électrique en énergie thermique comme une résistance afin de chauffer l'eau.

Si les prévisions ne permettant pas de produire suffisamment d'eau chaude alors les moyens secondaires 117 pour produire de l'énergie thermique sont alors activés par l'unité de contrôle 113 de sorte à fournir l'énergie thermique nécessaire pour répondre aux besoins.

Dans le cas d'une seconde variante, visible à la figure 4, où les moyens primaires 110 pour générer de l'énergie thermique à partir d'énergie renouvelable comprennent des panneaux solaires thermiques 107 et des moyens pour générer de l'électricité à partir d'énergie renouvelable 103 pouvant être aussi utilisés pour alimenter le réseau 111 ou des moyens de stockage de l'énergie électrique 105 ou une unité consommatrice d'électricité 119, la gestion de l'installation 100 se passe comme ci-après.

En cas de prévisions de production suffisantes, l'installation 100 peut utiliser les panneaux solaires thermiques 107 en priorité pour chauffer l'eau et utiliser les moyens pour générer de l'électricité à partir d'énergie renouvelable 103 comme complément. Le reste de l'énergie électrique produite par les moyens pour générer de l'électricité à partir d'énergie renouvelable 103 est alors envoyé vers le réseau 111 ou vers les moyens de stockage de l'énergie électrique 105 ou vers l'unité consommatrice d'électricité 119.

Par contre, si les prévisions ne sont pas suffisantes, la totalité de l'énergie thermique produite par les moyens primaires 110 est utilisée pour faire de l'eau chaude et les moyens secondaires 117 sont utilisés pour produire de l'énergie thermique sont alors activés par l'unité de contrôle 113 de sorte à fournir l'énergie thermique nécessaire pour répondre aux besoins.

Dans une alternative, il peut être prévu que l'utilisateur puisse entrer lui-même la consigne COM. En effet, l'unité de contrôle 113 gère l'installation et notamment les moyens primaires 110 pour générer de l'énergie thermique à partir de d'énergie renouvelable et les moyens de stockage de l'énergie thermique 109 pour répondre aux besoins que la consigne défini. Néanmoins, il est possible que l'utilisateur puisse, par moment, vouloir une quantité d'eau chaude plus importante lors de période de très basse température ou lorsqu'il reçoit de la visite. Le système d'interface 115 de l'unité de contrôle 113 permet à l'utilisateur de choisir précisément un jour et d'indiquer qu'il veut plus d'eau chaude et d'entrer une donnée COM comme visible à la figure 2. Cela permet alors à l'unité de contrôle 113 de gérer l'installation 100 en prenant en compte le besoin particulier de l'utilisateur. L'unité de contrôle 113 pourra alors utiliser les moyens secondaires 117 pour produire de l'énergie thermique afin de répondre aux besoins de l'utilisateur et produire plus d'eau chaude.

Dans une seconde alternative, l'installation 100 est connectée au réseau 111 de façon interactive. En effet, il peut être prévu que l'installation 100 puisse fournir ses données de production, de prévisions et de consommation d'énergie électrique aux fournisseurs d'énergie qui alimentent le réseau. Cette variante permet aux fournisseurs d'avoir un retour d'informations sur la consommation et sur la production des installations 100 des ménages. Ainsi, les fournisseurs peuvent faire leurs prévisions de production en fonction de ces retours d'informations pour ajuster la production au plus juste et éviter tout gaspillage.

On comprendra que diverses modifications et / ou améliorations évidentes pour l'homme du métier peuvent être apportées aux différentes modes de réalisation de l'invention décrits dans la présente description sans sortir du cadre de l'invention.

Bien entendu, dans le cas ou les moyens de stockage de l'énergie électrique 105 sont constitués d'un électrolyseur permettant de convertir l'électricité fournie par les moyens parallèles 103 en énergie électrochimique c'est-à-dire en hydrogène et en oxygène, cet hydrogène et cet oxygène peuvent être utilisés autrement. En effet, il est possible de bruler directement cet hydrogène et cet oxygène pour produire de l'énergie thermique.

## Revendications

1. Installation de production et de stockage d'énergie (100) comportant
- des moyens primaires (110) pour générer de l'énergie thermique à partir d'énergie renouvelable,
- des moyens de stockage agencés pour stocker l'énergie thermique (109) fournie par les moyens primaires,
l'installation comprenant en outre des moyens secondaires (117) pour générer de l'énergie thermique et une unité de contrôle (113) pour gérer ladite installation, ladite unité de contrôle étant apte à recevoir des données représentatives de prévisions météorologiques (DATA) de sorte à pouvoir, en fonction de ses données représentatives de prévisions météorologiques, prévoir la production d'énergie thermique des moyens primaires (110) et en ce que ladite unité de contrôle est capable de transférer l'énergie thermique des moyens secondaires vers les moyens de stockage dans la cas où les moyens primaires ne sont pas capables de subvenir aux besoins prédéfinis en énergie thermique de ladite installation.

2. Installation selon la revendication 1, **caractérisé en ce que** les moyens primaires (110) comprennent des moyens parallèles (103) pour générer de l'électricité à partir d'énergie renouvelable et des moyens pour transformer cette électricité en énergie thermique.

3. Installation selon les revendications 1 ou 2, **caractérisé en ce que** les moyens primaires (110) pour générer de l'énergie thermique à partir de l'énergie solaire comprennent des panneaux solaires thermiques (107) et un circuit fermé dans lequel circule un liquide caloporteur.

4. Installation selon la revendication 3, **caractérisé en ce que** les moyens de stockage de l'énergie thermique (109) sont un réservoir d'eau utilisé pour une installation sanitaire et/ou le chauffage, ladite eau étant chauffée par échange thermique avec le liquide caloporteur des moyens primaires pour générer de l'énergie thermique à partir de l'énergie solaire.

5. Installation selon la revendication 2, **caractérisé en ce qu'**elle comprend en outre une alimentation au réseau électrique (111) et une unité consommatrice d'électricité (119) agencée pour utiliser l'énergie des moyens parallèles (103) pour générer de l'électricité à partir d'énergie renouvelable et/ou du réseau électrique.

6. Installation selon la revendication 5, **caractérisé en ce que** l'installation (100) comprend en outre des moyens de stockage d'électricité (105) qui sont des batteries et/ou un électrolyseur créant de l'hydrogène avec l'énergie électrique des moyens parallèles (103) pour générer de l'électricité à partir d'énergie renouvelable ou du réseau électrique.

7. Installation selon l'une des revendications précédentes, **caractérisé en ce que** les moyens secondaires (117) pour générer de l'énergie thermique utilisent de l'électricité fournie par les moyens parallèles (103) pour générer de l'électricité à partir d'énergie renouvelable et/ou le réseau électrique (111).

8. Installation selon l'une des revendications 1 à 6, **caractérisé en ce que** les moyens secondaires (117) pour générer de l'énergie thermique utilisent des énergies fossiles.

9. Installation selon les revendications 5 ou 6, **caractérisé en ce qu'**elle comprend en outre un véhicule utilisant l'énergie électrique des moyens de stockage de l'énergie électrique.

10. Procédé de gestion d'une installation de production et de stockage d'énergie (100) comportant
- des moyens primaires (110) pour générer de l'énergie thermique à partir d'énergie renouvelable,
- des moyens de stockage agencés pour stocker l'énergie thermique (109) fournie par les moyens primaires,
- des moyens secondaires (117) pour générer de l'énergie thermique et
- une unité de contrôle (113) pour gérer ladite installation, **caractérisé en ce que** ledit procédé comprend les étapes suivantes :
a) définir une consigne représentant la quantité d'énergie thermique nécessaire à l'installation;
b) récupérer des données représentatives de prévisions météorologiques (DATA), et utiliser ces données pour réaliser des prévisions de production d'énergie thermique par les moyens primaires (107) pour générer de la chaleur à partir de l'énergie solaire;
c) transférer l'énergie thermique produite par les moyens primaires (110) pour générer de l'énergie thermique à partir d'énergie renouvelable vers les moyens de stockage agencés pour stocker l'énergie thermique (109),
d) si les prévisions de production ne permettent pas de satisfaire la consigne définie représentant la quantité d'énergie thermique nécessaire à l'installation, utiliser les moyens secondaires (117) pour générer de l'énergie thermique afin de transférer l'énergie thermique générée par lesdits moyens secondaires vers les moyens de stockage (109) de sorte que la consigne soit respectée.

11. Procédé de gestion selon la revendication 9, **caractérisé en ce que** les moyens primaires (110) comprennent des moyens parallèles (103) pour générer de l'électricité à partir d'énergie renouvelable et des moyens pour transformer cette électricité en énergie thermique.

12. Procédé de gestion selon la revendication 11, **caractérisé en ce que** l'installation (100) comprend en outre une alimentation au réseau électrique (111), une unité consommatrice d'électricité (119) et des moyens de stockage de l'énergie électrique (105) reliés directement aux moyens parallèles (103) pour générer de l'électricité à partir d'énergie renouvelable et **en ce que**
L'étape a) consiste en outre à définir une consigne représentant la quantité d'énergie électrique nécessaire à l'installation (100);
L'étape b) consiste également à récupérer des données représentatives de prévisions météorologiques (DATA) utilisées pour réaliser des prévisions de production d'énergie électrique par les moyens (103) pour générer de l'électricité à partir d'énergie renouvelable ;
L'étape c) consiste en outre à transférer l'énergie électrique produite les moyens parallèles (103) pour générer de l'électricité à partir d'énergie renouvelable vers l'unité consommatrice d'électricité et/ou les moyens de stockage (105) de l'énergie électrique et/ou l'alimentation réseau (111), et
L'étape d) consiste également à utiliser l'alimentation réseau (111) afin de transférer de l'énergie électrique vers les moyens de stockage (105) de l'énergie électrique et/ou l'unité consommatrice d'électricité (119) si les prévisions de production ne permettent pas de satisfaire la consigne définie représentant la quantité d'énergie électrique nécessaire à l'installation.

13. Procédé de gestion selon la revendication 10, **caractérisé en ce que** les moyens primaires pour générer de l'énergie thermique (110) à partir de l'énergie solaire comprennent des panneaux solaires thermiques (107) et un circuit fermé dans lequel circule un liquide caloporteur.

14. Procédé de gestion selon la revendication 13, **caractérisé en ce que** les moyens de stockage de l'énergie thermique (109) sont un réservoir d'eau utilisé pour une installation sanitaire et/ou le chauffage, ladite eau étant chauffée par échange thermique avec le liquide caloporteur des moyens primaires pour générer de l'énergie thermique à partir de l'énergie solaire.

15. Procédé de gestion selon la revendication 10, **caractérisé en ce que** la consigne représentant l'énergie thermique nécessaire à l'installation est défini par des calculs permettant d'obtenir la consommation moyenne de chaleur.

16. Procédé de gestion selon la revendication 10, **caractérisé en ce que** la consigne (COM) représentant la quantité d'énergie thermique nécessaire à l'installation est entrée manuellement par l'utilisateur.

17. Procédé de gestion selon la revendication 10, **caractérisé en ce que** la consigne représentant la quantité de chaleur nécessaire à l'installation consiste à avoir en permanence les moyens de stockage de l'énergie thermique (109) pleins.
